# EUROPEAN PATENT SPECIFICATION

(11) **EP 3 334 162 B1**
(45) Date of publication and mention of the grant of the patent: **08.07.2020**
(21) Application number: 18152528.8
(22) Date of filing: 13.10.2016
(51) Int. Cl.: H04N 19/597, H04N 19/426, H04N 19/88

(54) **PARTIAL DECODING FOR ARBITRARY VIEW ANGLE AND LINE BUFFER REDUCTION FOR VIRTUAL REALITY VIDEO**
PARTIELLES DECODIEREN FÜR BELIEBIGEN BETRACHTUNGSWINKEL UND ZUR ZEILENPUFFERREDUZIERUNG FÜR VIDEO MIT VIRTUELLER REALITÄT
DÉCODAGE PARTIEL POUR UN ANGLE DE VUE ARBITRAIRE ET UNE RÉDUCTION DE MÉMOIRE TAMPON DE LIGNE POUR UNE VIDÉO DE RÉALITÉ VIRTUELLE

(30) Priority: 13.10.2015 US 201562240693 P; 14.12.2015 US 201562266764 P; 07.10.2016 US 201615289092
(43) Date of publication of application: 13.06.2018
(62) Divisional of application: 16854943.4
(73) Proprietor: MediaTek Inc., Hsin-Chu 300 (TW)
(72) Inventor: LIN, Hung-Chih, Caotun Township, Nantou County 542 (TW); CHANG, Shen-Kai, Zhubei City, Hsinchu County 302 (TW); HUANG, Chao-Chih, Zhubei City, Hsinchu County 302 (TW)
(74) Representative: Hoefer & Partner Patentanwälte mbB

(56) References cited:
- WO-A1-2017/137444
- WO-A1-2017/162911
- WO-A1-2018/067952
- WO-A1-2018/071666
- KIM HANSUNG ET AL: "Planar urban scene reconstruction from spherical images using facade alignment", IVMSP 2013, IEEE, 10 June 2013 (2013-06-10), pages 1-4, XP032487683, DOI: 10.1109/IVMSPW.2013.6611923 [retrieved on 2013-09-25]
- SMOLIC, A; KIMATA H: "Report on 3DAV Exploration", 65. MPEG MEETING;21-07-2003 - 25-07-2003; TRONDHEIM; (MOTION PICTURE EXPERT GROUP OR ISO/IEC JTC1/SC29/WG11), no. N5878, 26 July 2003 (2003-07-26), XP030012959,
- H-C LIN ET AL: "AHG8: Compact cube layout with tile partition", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/, no. JVET-D0104, 6 October 2016 (2016-10-06), XP030150347,
- HE Y ET AL: "AHG8: InterDigital's projection format conversion tool", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D0021, 12 August 2016 (2016-08-12), XP030150243,
- KIN-LOK CHAN ET AL: "Video object coding and rendering for panoramic video", 2006 14TH EUROPEAN SIGNAL PROCESSING CONFERENCE, IEEE, 3 September 2002 (2002-09-03), pages 1-4, XP032754229, ISSN: 2219-5491 [retrieved on 2015-03-27]
- CHAN S-C ET AL: "Data Compression and Transmission Aspects of Panoramic Videos", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 15, no. 1, 1 January 2005 (2005-01-01), pages 82-95, XP011124668, ISSN: 1051-8215, DOI: 10.1109/TCSVT.2004.839989

## Description

### CROSS RERENCE TO RELATED PATENT APPLICATIONS

This application claims the priority benefit of U.S. Provisional Application No. 62/240,693, filed on 13 October 2015, U.S. Provisional Application No. 15/289,092, filed on 7 October 2016, and U.S. Provisional Application No. 62/266,764, filed on 14 December 2015.

### TECHNICAL FIELD

The present disclosure is generally related to video encoding and decoding in electronic apparatuses and, more particularly, to virtual reality video applications that allow arbitrary view angles or regions.

### BACKGROUND

Unless otherwise indicated herein, approaches described in this section are not prior art to the claims listed below and are not admitted to be prior art by inclusion in this section.

360-degree virtual reality (360VR) is an audiovisual simulation of an altered, augmented, or substituted environment. The visual reality video surrounds the user, allowing the user to look around in any direction or at any arbitrary view angle, just as he or she can in real life. 360VR videos produce exceptional high-quality and high-resolution panoramic videos for use in print and panoramic virtual tour production for a variety of applications, such as entertainment, pilot training, surgery, and exploration in space or deep water.

The IEEE-Article "Planar urban scene reconstruction from spherical images using facade alignment", XP032487683, discloses a method according to the preamble portion of claim 1. The ISO/IEC report "Report on 3DAV Exploration" (no. N5878), discloses a method for 360-degree virtual reality video compression.

### SUMMARY

The following summary is illustrative only and is not intended to be limiting in any way. That is, the following summary is provided to introduce concepts, highlights, benefits and advantages of the novel and non-obvious techniques described herein. Select and not all implementations are further described below in the detailed description. Thus, the following summary is not intended to identify essential features of the claimed subject matter, nor is it intended for use in determining the scope of the claimed subject matter.

In some embodiments, a video encoder may receive a 360VR video frame that is in a spherical format or in a cubic format. When the received 360VR video frame is in the cubic format, the video frame has a plurality of cubic faces that each corresponds to a different face of a cube. The video encoder may reformat the 360VR video frame by rearranging the plurality of cubic faces. The cubic faces of the reformatted video frame are arranged in (i) a single column of six faces, or (ii) two columns of three cubic faces each. The received 360VR video frame is in a spherical format or in a cubic format. When the received 360VR video frame is in the cubic format, a plurality of cubic faces of the received 360VR video frame are arranged in a first layout that has a first width, and the cubic faces of the reformatted video frames are arranged in a second layout that has a second width that is narrower than the first width. The reformatted video frame is encoded using a line buffer for storing reference pixels for prediction, wherein the width of the line buffer is a width of one cubic face or two cubic faces.

### BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
**Figure 1** illustrates a video decoding system that performs partial decoding of video frames based on arbitrarily selected viewing angles or regions.
**Figure 2** conceptually illustrates the partial decoding of an example video frame based on a specified view region.
**Figure 3** illustrates partial decoding under different video encoding standards that partition video frames into different types of encoded data units.
**Figure 4** illustrates the partial decoding of a sequence of video frames for a specified view region.
**Figures 5** and **6** illustrate several types of prediction structure between the master frames and the slave frames.
**Figure 7** illustrates an example decoder that performs partial decoding of slave frames according to arbitrarily specified view regions.
**Figures 8** and **9** conceptually illustrates processes for partial decoding of video frames based on arbitrary specified viewing regions.
**Figure 10** illustrates an example video encoder that can be constrained to produce encoded videos that maximizes performance by partial decoding.
**Figure 11** conceptually illustrates a process for encoding video that is optimized for partial decoding for arbitrary view region.
**Figure 12** illustrates an example 360VR image in spherical format and in cubic format.
**Figure 13** illustrates the storage format of a 360VR image in greater detail.
**Figure 14** illustrates different layouts of a cubic 360VR image that allow efficient utilization of line buffers that are narrower than the full size 360VR image.
**Figure 15** illustrates a video encoder that rearranges the six cubic 360VR faces into a narrow configuration that allows the use of a narrow line-buffer.
**Figure 16** illustrates a video encoder that receives raw 360VR video source in contiguous cubic format while using a narrower line buffer.
**Figure 17** illustrates the coding of a 360VR cubic frame that is rearranged into a one-column layout during encoding.
**Figure 18** illustrates the partitioning of a rearranged frame into slices, tiles, or sub-videos.
**Figure 19** illustrates the coding of a 360VR cubic frame that is rearranged into a two-row-three-column layout during encoding.
**Figure 20** illustrates a decoder that decodes 360VR video with rearranged cubic faces.
**Figure 21** conceptually illustrates processes for encoding and decoding 360VR video in cubic format.
**Figure 22** conceptually illustrates an electronic system in which some embodiments of the present disclosure are implemented.
**Figure 23** depicts an exemplary decoder apparatus.
**Figure 24** depicts an exemplary encoder apparatus.

### DETAILED DESCRIPTION

In the following detailed description, numerous specific details are set forth by way of examples in order to provide a thorough understanding of the relevant teachings.

In some instances, well-known methods, procedures, components, and/or circuitry pertaining to one or more example implementations disclosed herein may be described at a relatively high level without detail, in order to avoid unnecessarily obscuring aspects of teachings of the present disclosure.

Though 360VR video encodes a visual environment that surrounds the user, the user is typically viewing the video at a particular view angle. In other words, unlike conventional flat video in which the user is expected to view the entire display area of the video, the user of 360VR is expected to view a particular sub-region of the entire display area of the video. Such a view region is a usually relatively small partial area of each frame. The remaining area of the frame would not be viewed, even if the entire frame is decoded and available for viewing. The computing resources consumed for decoding pixels that were never viewed by the user is thus wasted.

### I. Partial Decoding for Arbitrary View Region

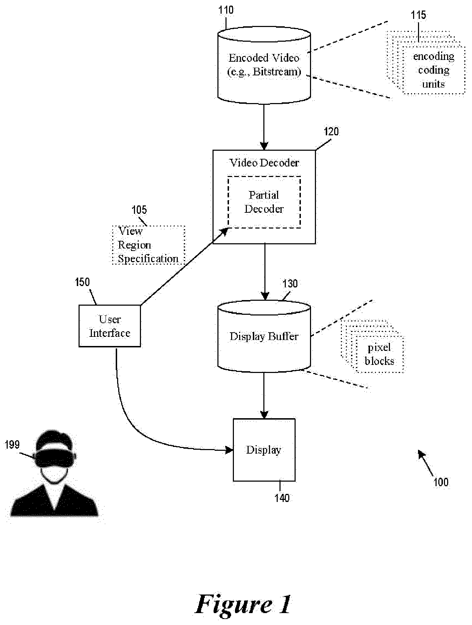

Some illustrative examples of the present disclosure provide apparatus and methods for partially decoding video frames when a sub-region of the video is selected for viewing. Specifically, the method or apparatus identifies and decodes data units and pixel blocks of video frames that are needed to display the sub-region while bypassing data units and pixel blocks that are identified as unnecessary for displaying the sub-region. Since the partial decoding is for an arbitrarily selected sub-region, it is also referred to as regional decoding. For some examples, **Figure 1** illustrates a video decoding system 100 that performs partial decoding of video frames based on arbitrarily selected viewing angles or regions. The video decoding system decodes video frames from an encoded source 110 and, at a display 140, displays the decoded video at a specified view angle. The decoding system 100 performs partial decoding based on a view region specification 105 of a viewing angle. As illustrated, the video decoding system 100 includes the encoded video source 110, a decoder 120, a display buffer 130, a user interface 150, and a display device 140. In some examples, the video decoding system 100 and its various components are part of a virtual reality system (e.g., a virtual reality goggle 199). For example, the user interface 150 corresponds to a collection of position and motion sensors of the virtual reality goggle that senses and records the motion of the user, while the display device 140 corresponds to the viewing screen of the virtual reality goggle. The decoder 120, the display buffer 130, and the encoded video source 110 are implemented by processing and memory circuit components embedded in the goggle.

The encoded video source 110 stores encoded video 115. In some embodiments, the encoded video source 110 includes a storage device that stores the encoded video 115. In some examples, the encoded video source 110 includes a communications device for receiving the encoded video 115 from an external source through wired or wireless communications mediums.

The encoded video 115 is data that represent video. The encoded video in form of a bitstream, which encodes video in a compressed format according to a video encoding standard, such as H.26x (e.g., H.264, H.265, etc.), VPx (e.g., VP8, VP9, etc.). The encoded video is organized into various encoded data units such as groups of pictures (GOPs), frames, slices, tiles, and/or pixel blocks. For some video standards, the encoded data units are organized into hierarchies. For example, a sequence of video frames may include one or more encoded frames, an encoded frame may include one or more slices (or tiles), and a slice may include one or more pixel blocks.

Some of the encoded data units can be decoded independently from other encoded data units. For example, an encoded frame can have slices (or tiles) that do not depend on other slices (or tiles) at the same frame for encoding or decoding. When decoding such encoded frame, the decoder is free to decode the slices in parallel, or to skip an earlier slice to directly decode a later slice.

The decoder 120 receives the encoded video 115 and performs decompression and/or decoding. In some examples, the decoder 120 decompresses the various encoded data units in the encoded video 115, and then reconstructs the pixel blocks from the data of the decompressed data units. The reconstructed pixel blocks are then placed in the display buffer 130 to be displayed by the display device 140.

The user interface 150 receives user input indicative of a sub-region viewed by the user or viewing angle of the user (e.g., by the motion or the position of the virtual reality goggle, or by other user interactions) and generates the view region specification 105 accordingly. The view region specification 105 specifies the position of the view region within the display area. (In some examples, the view region specification 105 also specifies the size and the shape of the view region). The user interface 150 provides the view region specification 105 to the decoder 120 and the display device 140. In turn, the decoder 120 decodes the necessary data units and pixel blocks to reconstruct the view region specified by the view region specification 105, while the display device 140 displays the specified view region.

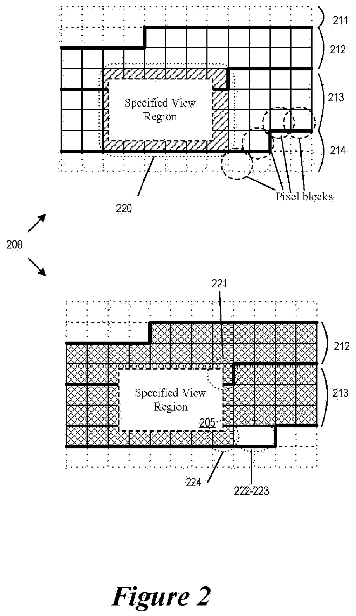

**Figure 2** conceptually illustrates an example of the partial decoding of an example video frame 200 based on a view region specification (e.g., 105). The example video frame 200 is a full resolution video frame as provided by the encoded video 115. In case of when the encoded video 115 is of a 360VR video, the example video frame 200 represents the entire virtual reality display area that surrounds the user. The partial decoding is performed by the decoder 120 of the video decoding system 100.

As illustrated, the video frame 200 is divided into a two-dimensional array of pixel blocks. Each pixel block is a two-dimensional array of pixels. For video encoded according to H.264 format, a pixel block is referred to as a macroblock (16x16 pixels). For video encoded in H.265 format, a pixel block may be referred to as a 64x64 coding tree unit, which can be sub divided as a quad tree. For VP9, a pixel block is referred to as 64x64 superblock.

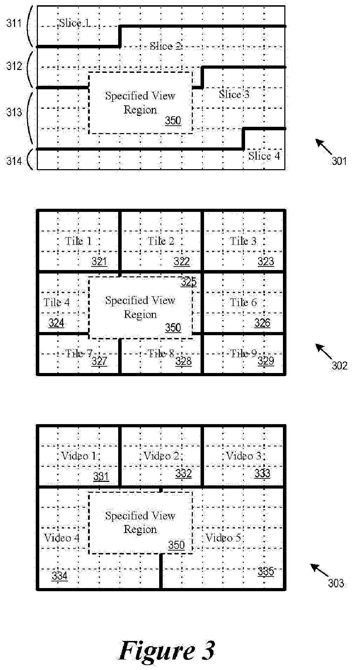

The video frame 200 is also divided into several different partitions 211-214, each partition corresponds to a respective encoded data unit in the encoded video 115. For the example video frame 200, each of the encoded data units corresponds to a slice. (**Figure 3**, described below, illustrates example video frames in which each encoded data unit corresponds to a tile in H.265 or a sub-video in a group of videos in VP9.) Each encoded data unit includes the encoded data for reconstructing the pixel blocks within the partition.

As illustrated, the view region specification 105 specifies a view region 205, which occupies a portion of entirety of the video frame 200. The view region 205 overlaps a set of pixel blocks 220 (illustrated as shaded pixel blocks) as well as encoded data units 212 and 213. When partially decoding the frame 200 for the view region 205, the decoder 120 decompresses the encoded data units (slices) 212 and 213 and reconstructs the set of pixel blocks 220. Other pixel blocks and encoded data units (211 and 214) are bypassed during the partial decoding process to save computing resources.

In the example of **Figure 2**, when partially decoding the video frame 200 for the specified view region 205, the decoder 120 decompresses the entire slice 212, since the last pixel block 221 of the slice 212 is one of the pixel blocks overlapping the specified view region 205, so the decoder decompress the entire slice 212 in order to obtain the data necessary for reconstructing the pixel block 221. (The entire slice 212 is illustrated as shaded.) On the other hand, the last two pixel blocks 222 and 223 of the slice 213 do not overlap the specified view region 205. Therefore there is no need to reconstruct these two pixel blocks. Consequently, the decoder may not decompress the encoded data unit 213 as soon as it has the necessary data from the encoded data unit 213 to reconstruct the pixel block 224 (which is the last pixel block in the slice 213 that overlaps the view region 205).

As mentioned, different video encoding standards provides different ways to partition a video frame into multiple encoded data units. However, the same principle of identifying and decoding the necessary encoded data units and pixel blocks still applies. **Figure 3** illustrates partial decoding under different video encoding standards that partition video frames into different types of encoded data units.

**Figure 3** shows partial decoding of the three different video frames 301, 302, and 303 for three different types of partitions. Each partition of a video frame is an encoded data unit that can be decoded independently of other partitions in the same frame. The video frame 301 is divided into slices 311-314 (of H.264 or H.265). The video frame 302 is divided into tiles 321-329 (of H.265). The video frame 303 is divided into sub-videos 331-335 (of H.264, H.265, or VP9). The figure shows each of these frames being partially decoded in response to a view region specification 105 that identifies a view region 350.

As illustrated, for the video frame 301, the partial decoding operation decodes slices 312 and 313 while skipping decoding of slices 311 and 314, since slices 312 and 313 overlap the view region 350 while the slices 311 and 314 do not. For the video frame 302, the partial decoding operation decodes the tiles 324, 325, 327, and 328 while bypassing decoding of 321, 322, 323, 326, and 329. For the video frame 303, the partial decoding operation decodes the sub-videos 334 and 335 while bypassing decoding of sub-videos 331, 332, and 333.

In order to achieve greater coding efficiency, most video encoding standards employ predictive coding, i.e., encoding pixel blocks by referencing pixel data in another video frame (inter-prediction) or elsewhere in the same frame (intra-prediction). In contrast, intra-coding encodes pixels of a pixel block by using only information (e.g., transform samples) within the pixel block without referencing information outside of the block. Traditionally, a frame that does not reference another frame (i.e., all pixel blocks are either intra-coded or intra-predicted) is referred to as an I-frame, a frame whose pixel blocks may reference a frame in the temporal past is referred to as a P-frame, while a frame whose pixel blocks may reference frames both in the temporal past and the temporal future are referred to as a B-frame. An encoded video is typically a sequence of video frames that include I, P, and B type frames.

In some examples, partial decoding for arbitrarily specified view region is implemented on video sequences that use predictive coding. In some of these examples, the frames in a video sequence are classified as master frames or slave frames. Master frames are frames that are fully decoded regardless of any specified view region, while slave frames are frames that can be partially decoded based on view region specification. The pixel blocks of slave frames can be encoded as inter-predicted blocks that reference pixels in master frames (by using motion vectors) but not other slave frames.

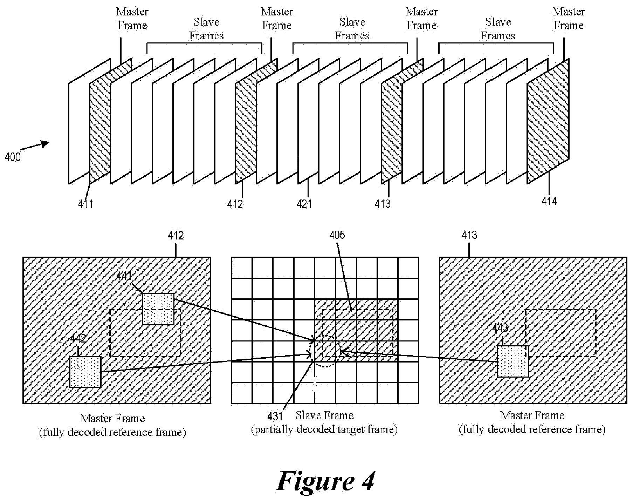

**Figure 4** illustrates the partial decoding of a sequence of video frames 400 for a specified view region. As illustrated, the sequence of video frames 400 has a mixture of master frames and slave frames, including master frames 411-414 and a slave frame 421. The video decoding system has received a viewing region specification for a viewing region 405.

Each of the master frames in the sequence 400 is fully decoded, regardless of the specified viewing region. Since the specification of viewing region is arbitrarily decided by the user in real time, it is necessary to fully decode each of the master frames because any region of a master frame maybe referenced by the specified viewing region of subsequent slave frames.

**Figure 4** illustrates the partial decoding operation of an example slave frame 421 in the sequence 400. The slave frame 421 uses master frames 412 and 413 as reference for reconstruction. The slave frame 421 is partially decoded based on the specified view region 405, i.e., only the pixel blocks in the slave frame 421 that overlap the view region 405 are decoded and reconstructed (illustrated as shaded). The pixel block 431 is one of the pixel blocks overlapping the view region 405 and is therefore decoded and reconstructed by the partial decoding operation. For example, the pixel block 431 is an inter-predicted block that references pixels in regions 441, 442, and/or 443 (not necessarily pixel blocks) in master frames 412 and 413. It is worth noting that the regions 441, 442, and/or 443 in master frames 412 and 413 do not necessarily overlap the specified view region 405. The decoder therefore fully decodes the master frames regardless of the specified view region.

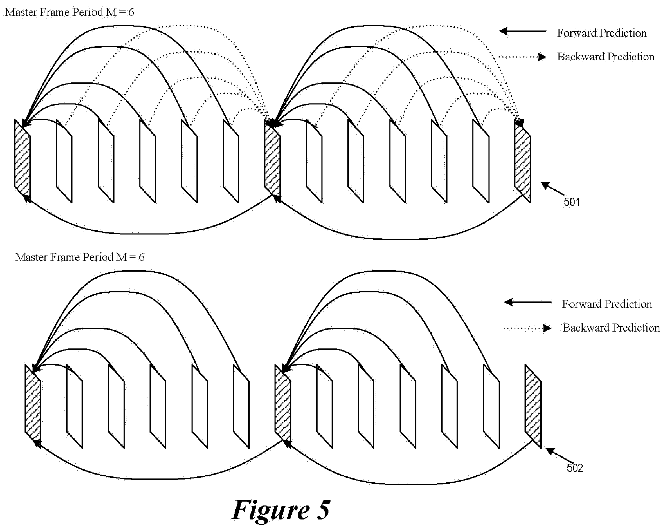

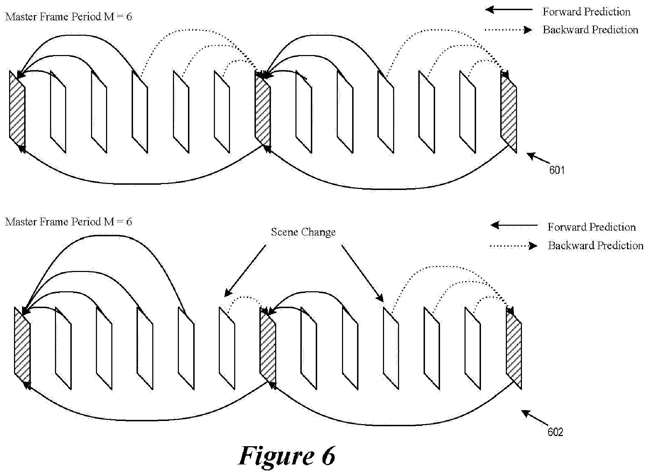

**Figures 5** and **6** illustrate several types of prediction structure between the master frames and the slave frames. **Figure 5** illustrates two video sequences 501 and 502 with different master-slave prediction structures. The video sequence 501 has a general prediction structure in which each slave frame is encoded by using bidirectional prediction referencing at least two master frames (temporal past and temporal future), i.e., each slave frame is a B-frame. The video sequence 502 has a low latency prediction structure in which each slave frame is encoded by using only forward prediction based on the previous master frame, i.e., each slave frame is a P-frame.

**Figure 6** illustrates two other video sequences 601 and 602 with different master-slave prediction structures. The video sequence 601 has an alternative prediction structure in which each slave frame uses only the temporally nearest master frame as prediction reference. The video sequence 602 has an adaptive prediction structure, in which, according to the information of scene change, the video encoder can determine which master frame(s) will be referenced for encoding slave-frame, i.e., a slave frame does not reference a particular master frame if there is a scene change that is temporally between the slave frame and the particular master frame.

Partially decoding slave frames alleviate the decoding system from having to decode portions of slave frames that are outside of the specified view region and will not be viewed by the user. Since the master frames still have to be fully decoded, the performance gain by partial decoding is based on the size of the specified view region as well as the period of master frames. For example, if the resolution of the video is 3840x2160, the size of the specified view region is 1280x720 (which may require the decoded pixel blocks occupying a region 1536x864), and the master frame period is 6 (i.e., there is one master frame for every 6 frames in the sequence), then only 30% of the pixel blocks would have to be decoded.

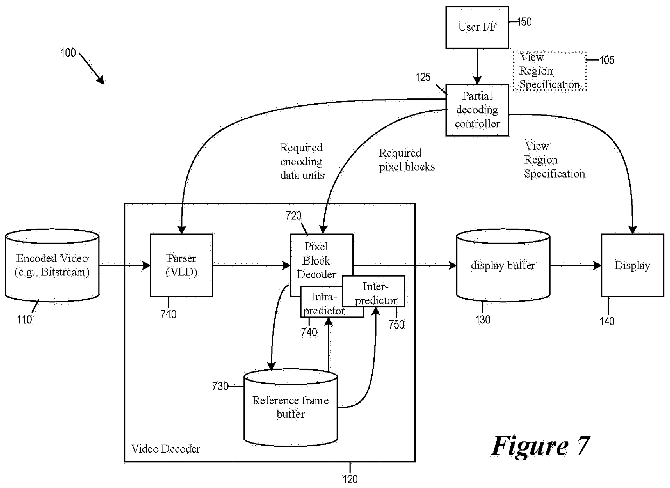

For some examples, **Figure 7** illustrates an exemplary decoder that performs partial decoding of slave frames according to arbitrarily specified view regions. Specifically, the figure illustrates the decoder 120 of the decoding system 100 in greater detail.

The decoder 120 includes components for decompressing encoded data units and for reconstructing pixel blocks. The various components operate according the view region specification 105 provided by the user interface 150.

As illustrated, the decoder 120 receives encoded video (e.g., in bitstream form) and stores decoded video at the display buffer 130 to be displayed by the display device 140. The decoder 120 includes a parser 710, a pixel block decoder 720, and a reference frame buffer 730. The pixel block decoder 720 includes an intra predictor 740 and an inter predictor 750.

The parser 710 is for unpacking encoded data units in the bitstream. For some video standards, the encoded data units are losslessly compressed by variable length coding (VLC) based on entropy coding. The parser is therefore also referred to as a variable length decoder (VLD). Different video standards use different types of entropy encoding. For example, H.264 utilizes Hoffman coding, while H.265 utilizes CABAC (context adaptive binary arithmetic coding). Most of the state-of-the-art video standards use CABAC-based entropy coding to have less coding bits. When partially decoding a frame (specifically a slave frame), the parser 710 would skip over encoded data units that do not include any pixel blocks that overlap the specified view region.

The pixel block decoder 720 is used for reconstructing pixel blocks based on the information stored in (and uncompressed from) the encoded data units. The pixel block decoder 720 also relies on prediction for decoding some of the pixel blocks. For a pixel block that is intra-predicted, the pixel block decoder 720 (by using intra-predictor 740) reconstructs the pixel block by referencing adjacent pixel blocks within the same frame. For a pixel block that is inter-predicted, the pixel block decoder 720 (by using the inter-predictor 750) reconstructs the pixel block by referencing other frames (e.g., through motion vectors and performing motion compensation).

The reference frame buffer 730 stores decoded frames (and the reconstructed pixel blocks of the decoded frames). When performing partial decoding, master frames are completely decoded and then stored in the reference frame buffer 730 in order to serve as reference frame for reconstructing the pixel blocks of slave frames.

As mentioned, the various components of the decoder perform partial decoding operations according to the view region specification 105, which specifies a view region that is arbitrarily selected by the user through the user interface 150. The view region specification 105 is in turn used to control the operations of the parser 710 and the pixel block decoder 720. The view region specification 105 is also forwarded to the display device 140 so it knows which region of the decoded video frame is being selected as the view region for display.

The video decoder 100 identifies the encoded data units and pixel blocks that are necessary for displaying the specified view region. In **Figure 7**, this functionality is conceptually illustrated as a partial decoding controller module 125, which takes the view region specification 150 and instructs the parser 710 as to which encoded data units needs to be decompressed and the pixel decoder 720 as to which pixel blocks needs to be reconstructed. In some examples, the functionality of identifying which encoded data units to decompress is performed by the parser 710, which uses the view region specification 150 to determine whether an encoded data unit has to be decoded or can be skipped. Likewise, the functionality of identifying which pixel blocks has to be decoded is performed by the pixel block decoder 720, which uses the view region specification 150 to determine whether a pixel block has to be reconstructed or can be skipped. Both the parser 710 and the pixel block decoder 720 are aware whether the currently decoded frame is a master frame or a slave frame in order to ensure that the master frames are fully decoded.

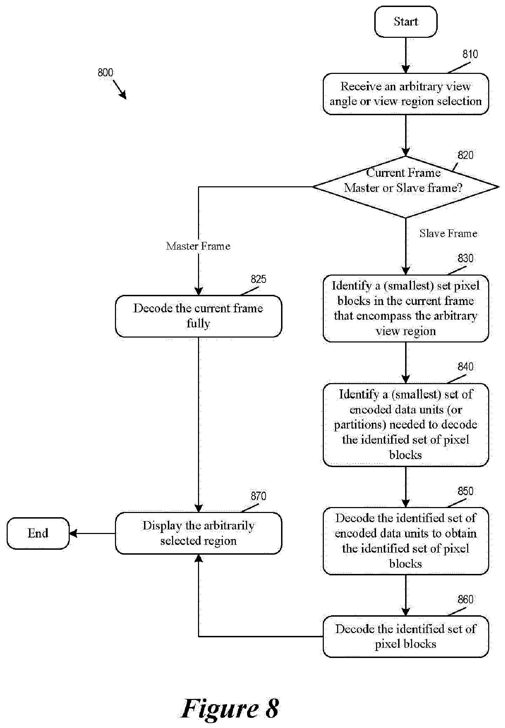

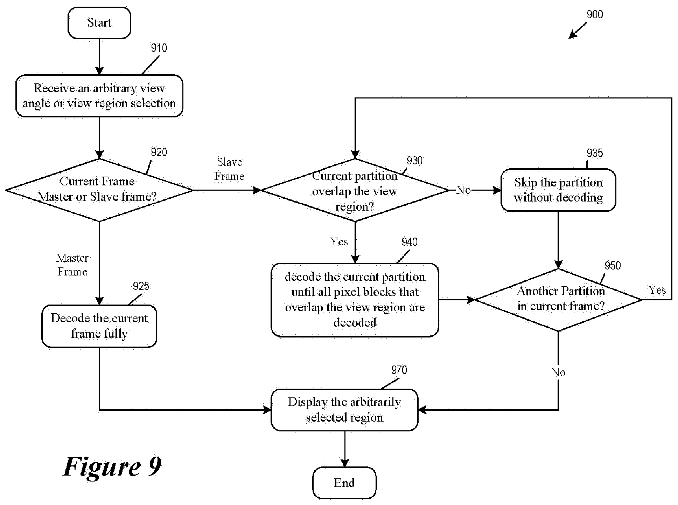

**Figures** 8 and 9 conceptually illustrates processes 800 and 900 for partial decoding of video frames based on arbitrary specified viewing regions. In some examples, one or more processing units implementing the decoding system 100 perform either the process 800 or the process 900. In some examples, the processing units performing the process 800 or 900 do so by executing a software having modules that corresponds to the various components of the decoding system 100, e.g., the parser 710, the pixel block decoder 720, the partial decoding controller 125, etc. It is noted that, provided that the result is substantially the same, the steps of the processes are not required to be executed in the exact order shown in **Figures 8** and **9**.

The process 800 starts when the decoding system 100 has received encoded video (i.e., bitstream) and is performing decoding operations to reconstruct and display individual frames.

The process 800 receives (at step 810) an arbitrary view angle or view region selection that specifies a view region, which is a sub-region of a fully decoded video frame according to the encoded video.

The process 800 then determines (at step 820) whether the frame currently being decoded is a slave frame or a master frame. In some examples, the encoder of the video bitstream embeds the designation of whether a frame is a master frame or a slave frame (for the purpose of partial decoding) within the bitstream. In some examples, the decoder decides whether the frame currently being decoded should be a master frame or a slave frame based on whether or not the currently decoded frame will be referenced later. If the frame currently being decoded is a master frame, the process proceeds to step 825. If the frame currently being decoded is a slave frame, the process proceeds to step 830.

At step 825, the process 800 fully decodes the current frame. The result of the decoding, i.e., the reconstructed pixel blocks are stored in the display buffer (e.g., 130) for display as well as in the reference buffer (e.g., 730) for reconstructing intra-predicted pixel blocks in the current frame and for reconstructing inter-predicted pixel blocks in other frames (slave frames and master frames). In some examples, storage or memory devices in the decoder implement the display buffer and the reference buffer. The process then proceeds to step 870.

At step 830, the process 800 identifies a set pixel blocks in the current frame that encompass the arbitrary view region. In some examples, this set of pixel blocks is the smallest set of pixel blocks that can encompass the specified view region. The process also identifies (at 840) a set of encoded data units (or partitions) needed to decode the identified set of pixel blocks. In some examples, this set of encoded data units is the smallest set of encoded data unit that can encompass the specified view region.

The process 800 then decodes (at step 850) the identified set of encoded data units and decodes (at step 860) and/or reconstructs the identified set of pixel blocks. In some examples, the process decodes the encoded data units in order to obtain the necessary data for reconstructing the identified set of pixel blocks. The reconstructed pixel blocks are stored in the display buffer 130 for the display device to display. These reconstructed pixel blocks are what is necessary to display the specified view region. Pixel blocks that are outside of the view region are not reconstructed. The process then proceeds to step 870.

At step 870, the process displays the arbitrarily selected view region based on the received view region specification. For the decoding system 100, the display device 140 uses the received view region specification to determine where in the display buffer 130 to retrieve pixel data for display. The process 800 then ends.

The process 900 starts when the decoding system 100 has received encoded video (i.e., bitstream) and is performing decoding operations to reconstruct and display individual frames.

The process 900 receives (at step 910) an arbitrary view angle or view region selection that specifies a view region, which is a sub-region of a fully decoded video frame according to the encoded video.

The process 900 determines (at step 920) whether the frame currently being decoded is a slave frame or a master frame. In some examples, the encoder of the video bitstream embeds the designation of whether a frame is a master frame or a slave frame (for the purpose of partial decoding) within the bitstream. In some examples, the decoder decides whether the frame being currently decoded should be master frame or slave frame based on whether or not the currently decoded frame will be referenced later. If the frame currently being decoded is a master frame, the process proceeds to step 925. If the frame currently being decoded is a slave frame, the process proceeds to step 930.

At step 925, the process fully decodes the current frame. The result of the decoding, i.e., the reconstructed pixel blocks are stored in the display buffer (e.g., 130) for display as well as in the reference buffer (e.g., 730) for reconstructing intra-predicted pixel blocks in the current frame and for reconstructing inter-predicted pixel blocks in other frames (slave frames and master frames). The process 900 then proceeds to 970.

At step 930, the process determines whether the current partition or encoded data unit being decoded or decompressed overlaps the specified view region, i.e., having pixel blocks that are needed to show the specified region. If so, the process proceeds to step 940. If the current partition does not overlap the specified view region, the process 900 proceeds to step 935.

At step 935, the process 900 skips decoding of the current partition for the next partition, since the current partition does not contain pixel data that is needed for reconstructing the pixel blocks for the specified view region. The process 900 then proceeds to step 950.

At step 940, the process 900 decodes the current partition until all pixel blocks that overlap the view region are decoded. In other words, the decode of the current partition stops as soon as there are no other pixel blocks within the current partition that overlaps the specified view region. The reconstructed pixel blocks are stored in the display buffer 130 to be displayed by the display device 140.

At step 950, the process 900 determines whether there is another partition or encoded data unit in the current frame that has yet to be decoded or determined to be unnecessary for showing the specified view region. If there is another partition in the current frame, the process returns to step 930. If no, the process 900 proceeds to step 970.

At step 970, the process displays the arbitrarily selected region based on the received view region specification. For the decoding system 100, the display device 140 uses the received view region specification to determine where in the display buffer 130 to retrieve pixel data for display. The process 900 then ends.

### II. Encoding Video For Arbitrary View Region

As mentioned, partial decoding of slave frames achieves performance gain by skipping over encoded data units and pixel blocks that are not needed to display the specified view region. In other words, the more encoded data units and pixel blocks that the video decoding system is able bypass and not decode, the more performance gain is achieved by the performing partial decoding. Intra-predicted pixel blocks in slave frames are therefore undesirable, because if a pixel block that overlaps the view region is intra-predicted by referencing adjacent pixel blocks in the same frame, that pixel block will have to be decoded even if it does not overlap the view region. On the other hand, inter-predicted pixel blocks in slave frames are more desirable, because they only reference the master frames, which are fully decoded or reconstructed regardless of the specified view region.

Some illustrative examples of the present disclosure provide an encoder that can be constrained to produce encoded videos that maximizes performance gain by partial decoding by e.g., minimizing the number of pixel blocks in slave frames that are encoded by using intra-prediction. In some examples, the encoder minimizes the number of intra-predicted blocks by using only inter-prediction in slave frames. In some examples, the encoder may allow intra-predicted blocks if all of its neighboring blocks are inter-predicted. This would prevent a chain of intra-predicted blocks in slave frames (a chain of intra-predicted blocks would frustrate the performance gain by partial decoding since potentially many pixel blocks falling outside of the view region would also have to be decoded).

As mentioned, a frame can be partitioned into a group of slices/tiles/videos. For a group of slices/tiles of a video frame, the visual quality between slices/tiles may be visibly different. For a group of sub-videos of a video frame, these individual sub-videos could have different frame type at the same time instant. Moreover, different sub-videos may be encoded to have different visual quality at the same time instant. In order to reduce artifact at the partition boundary between the independent partitions (e.g., slices/tiles/sub-videos), some examples of the present disclosure provide an encoder that can be constrained to require the independent partitions (e.g., slices/tiles/sub-videos) to have similar visual quality and/or the same frame type at the same time instant. The decoder in some examples is equipped with post-filter to further eliminate the blocky artifact.

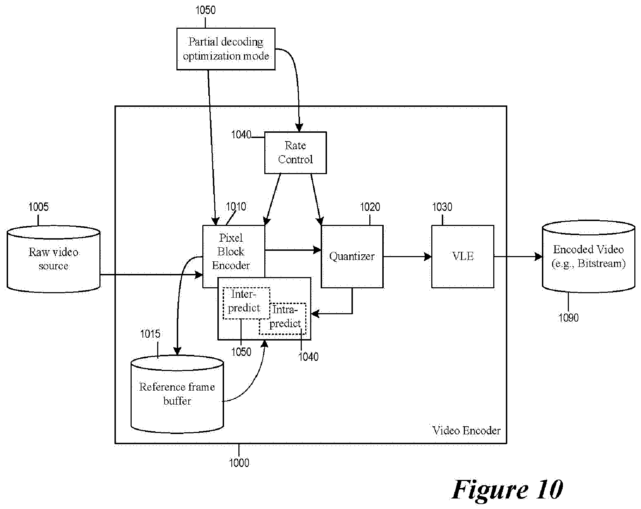

**Figure 10** illustrates an exemplary video encoder 1000 that can be constrained to produce encoded videos that maximizes performance by partial decoding. The video encoder 1000 receives raw, un-encoded video from a video source 1005 and produce encoded video 1090 for storage or transmission. The operation of the video encoder 1000 is subject to a partial decoding optimization mode 1050 (which can be a stored flag or a signal provided by a user interface) that constrains the encoder to produce encoded video that is optimized for partial decoding.

As illustrated, the video encoder 1000 includes a pixel block encoder 1010, a quantizer 1020, a variable length encoder (VLE) 1030, and a rate controller 1040. The partial decoding optimization mode 1050 controls the operations of the rate controller 1040 and the pixel encoder 1010.

The pixel block encoder 1010 can encode each pixel block by using intra-coding, intra-prediction, or inter-prediction. The pixel block encoder 1010 performs predictive coding by reconstructing the pixel blocks from the quantized samples. The pixel block encoder 1010 also includes a reference frame buffer 1015 in order to perform inter-prediction (by e.g., performing motion estimation and motion compensation).

In some examples, when encoding a slave frame with the partial decoding optimization mode 1050 asserted, the pixel block encoder 1010 allows inter-predicted mode while disallowing other modes such as intra-prediction. In some examples, the pixel block encoder 1010 would also allow intra-prediction but only for blocks whose adjacent pixel blocks are inter-predicted. For frames that are divided into a group of sub-videos, the pixel block encoder 1010 would ensure that all sub-videos at the same time instant have the same frame type.

The quantizer 1020 determines how the transformed samples are represented numerically. The finer the quantization granularity, the better the quality of the video, but more bits will be needed to represent the data in the bitstream. In some examples, the rate controller 1040 controls the operation of the quantizer 1020 based on bit-rate versus picture quality trade-off.

The variable length encoder (VLE) 1030 takes the output of the quantizer 1020 and performs lossless compression by using entropy encoding (e.g., Huffman, CABAC, etc.).

The rate controller 1040 controls the quality of the video by using the quantizer 1020 to control the bit rate. For a video that is partitioned into a group of slices/tiles/sub-videos, the assertion of the partial decoding optimization mode 1050 causes the rate controller 1040 to control the bit-rate of the different slices/tiles/sub-videos to have similar visual quality.

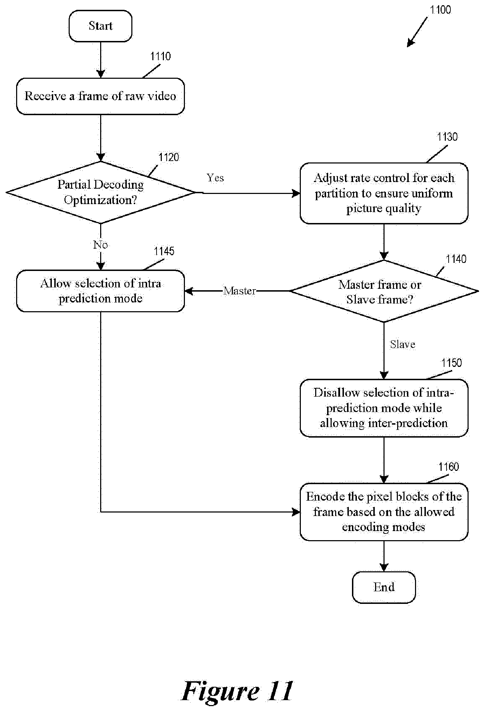

**Figure 11** conceptually illustrates a process 1100 for encoding video that is optimized for partial decoding (for arbitrary view region). In some examples, one or more processing units implementing the encoder system 1000 perform the process 1100. In some examples, the processing units performing the process 1100 do so by executing a software having modules that corresponds to the various components of the encoder 1000, e.g., the pixel block encoder 1010, the quantizer 1020, the variable VLE 1030, the rate controller 1040, etc. It is noted that, provided that the result is substantially the same, the steps are not required to be executed in the exact order shown in **Figure 11**.

The process 1100 starts when the encoder 1000 receives raw video to be encoded. The process 1100 receives (at step 1110) a frame of the raw video. In an example, the raw video is 360 VR video. The process 1100 also determines (at step 1120) whether the encoded video is to be optimized for partial decoding, e.g., when the partial decoding optimization mode 1050 is set. If the encoded video is to be optimized for partial decoding, the process 1100 proceeds to step 1130. Otherwise, the process 1100 proceeds to step 1145.

At step 1130, the process 1100 adjusts the rate control for each partition of the frame to ensure uniform picture quality across different partitions (e.g., slices/tiles/sub-videos).

At step 1140, the process 1100 determines whether the current frame being encoded is a master frame or a slave frame. In some examples, the encoder designate frames at fixed time intervals as master frames. In some examples, the encoder decides whether a frame should be I, B, or P frame before deciding whether the frame should be a master frame or a slave frame. If the frame currently being encoded is to be a master frame for the purpose of partial decoding, the process proceeds to 1145. If the frame currently being encoded is to be a slave frame for the purpose of partial decoding, the process 1100 proceeds to step 1150.

At step 1145, the process 1100 does not make any special requirement as to the encoding type of the pixel blocks. A pixel block can be intra-coded, intra-predicted, or inter-predicted, all at the discretion of the encoder based on considerations such as the picture content or rate control. The process 1100 then proceeds to step 1160.

At step 1150, the process 1100 installs settings that limit each pixel block to be encoded by only certain encoding types. Such settings in some examples allow the inter-prediction while disallowing intra-prediction. In some of these examples, the settings would allow intra-prediction of a pixel block only when the block's adjacent pixel blocks are coded by inter-prediction. For frames that are divided into a group of sub-videos, the settings ensure that the pixel blocks in different sub-videos have the same frame type. The process 1100 then proceeds to step 1160.

At step 1160, the process 1100 encodes the pixel blocks of the frame according to the encoding modes settings that are installed at steps 1145 or 1150. The process 1100 then ends (or return to step 1110 to receive another raw video frame).

### III. Line Buffer Reduction

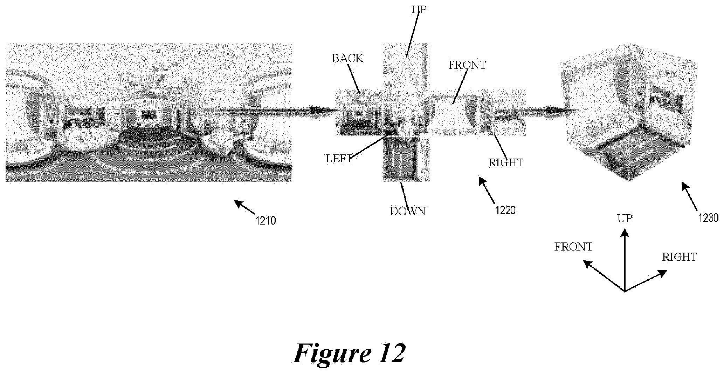

As mentioned, 360VR is visual reality video surrounds the user, allowing the user to look around in any direction or at any arbitrary view angle. The images of 360VR content are commonly encoded, stored, transmitted, and decoded as 2D images. A 360VR image can be stored in spherical format, in which the virtual reality image spherically surrounding the user is projected onto a two-dimensional flat surface in an equirectangular fashion. A 360VR image can also be stored in cubic format, in which each virtual reality image consists of 6 cubic faces (up, down, left, right, front, and back). Regardless of whether the 360VR image is represented by spherical format or cubic format, the image is divided into pixel blocks for encoding. **Figure 12** illustrates an example 360VR image in spherical format 1210 and in cubic format 1220. The figure also illustrates a cube 1230 that shows the spatial relationship between the different surfaces (or faces) of the cubic format 1220.

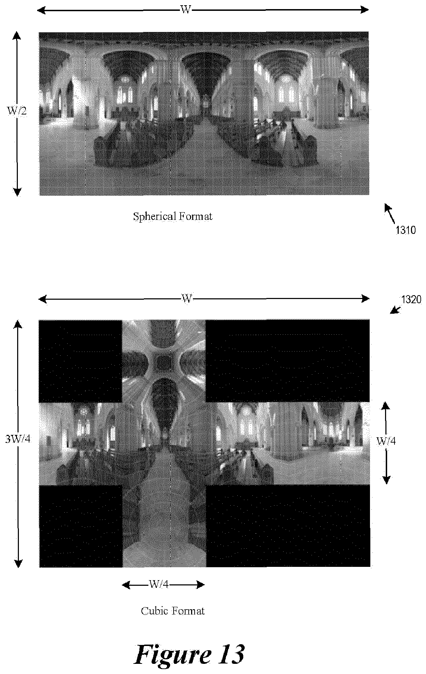

**Figure 13** illustrates the storage format of a 360VR image in greater detail. Specifically, the figure shows the dimension of a 360VR image in spherical format as well as in cubic format. The figure also shows the partitioning of the 360VR image in cubic format.

As illustrated, a 360VR image stored in spherical format 1310 is converted to cubic format 1320. The converted image 1320 in cubic format has six square cubic faces, each cubic face having width of W/4 pixels and height of W/4 pixels, which result in an image having overall width of W pixels and height of 3W/4 pixels. In this example, the source 360VR image 1310 in spherical format is shown as having width of W and height of W/2. However, for some embodiments, there is no fixed relationship in resolution between a source image in spherical format and its corresponding converted image in cubic format.

It is worth noting that the six faces/partitions of the cubic format in the image 1320 are arranged or laid out so the image content of the six faces are contiguous (i.e., the content of any two adjacent faces are continuous across their shared border). The surfaces in the horizontal direction are continuous in the sequence of back, left, front, and right, while the faces in the vertical direction are continuous in the sequence of up, left, and down. This arrangement, however, also leaves the image 1320 with areas that are blank without any actual pixel data (i.e., is not one of the surfaces of the cube), specifically along the top row of squares (i.e., the row with only the "up" partition) and along the last row of squares (i.e., the row with only the "down" partition).

When reconstructing a video frame, a video decoder such as 120 (or a video encoder such as 1000) temporarily places a reconstructed pixel line in a line buffer, which is provided by a memory or storage device in the encoder or decoder. The reconstructed pixel data stored in the line buffer serve as reference pixels for intra-prediction when encoding/decoding subsequent pixel blocks. The width of such a line buffer is typically the same as the width of a complete video image. Thus, for example, the width of line buffer needed to support the decoding or encoding of the 360VR images 1310 and 1320 is W pixels.

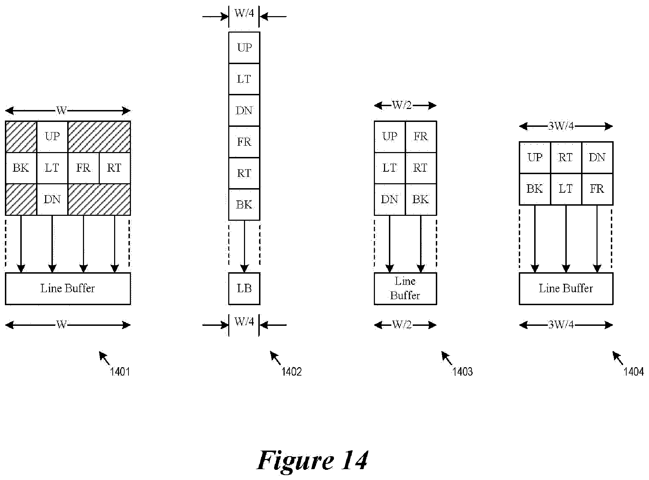

For the cost-effective design of the line buffer, some embodiments arrange the six faces of a cubic 360VR image in a layout that allows the line buffer to be narrower than the full sized 360VR image. **Figure 14** illustrates several layouts of a cubic 360VR image that allow efficient utilization of line buffers that are narrower than the full size 360VR image.

**Figure 14** illustrates four different layouts 1401-1404. The first layout 1401 illustrates the conventional arrangement of a 360VR cubic image for comparison purposes. It requires the line buffer to have the full width of the 360VR image (i.e., W pixels).

The second layout 1402 illustrates an arrangement in which the six faces of a 360VR cubic image are laid out as a single column. This layout reduces the width of the line buffer required to decode the 360VR cubic image to the width of one cubic face, i.e., W/4.

The third layout 1403 illustrates an arrangement in which the six faces of a 360VR cubic image are laid out in a three-row-by-two-column configuration. This layout reduces the width of the line buffer required to decode the 360VR cubic image to the width of two cubic faces, i.e., W/2.

The fourth layout 1404 illustrates an arrangement in which the six surfaces of a 360VR cubic image are laid out in a two-row-by-three-column configuration. This layout reduces the width of the line buffer required to decode the 360VR cubic image to the width of three cubic surfaces, i.e., 3W/4.

It is worth noting that, in each of the three line-buffer-reducing layouts 1402-1404, the content of the six faces are not necessarily contiguous. For example, in the configuration 1402, the content of the surfaces labeled UP, LT, and BT (up, left, and bottom) are contiguous, but the content of BT, FR, RT, and BK (bottom, front, right, and back) are not contiguous.

In some embodiments, an encoder for 360VR video receives video source in one of the line-buffer-width-saving layouts (e.g., the layouts 1402-1404) and uses a narrower line buffer (e.g., W/4). This also allows the decoder to use a corresponding narrower line-buffer when decoding the video.

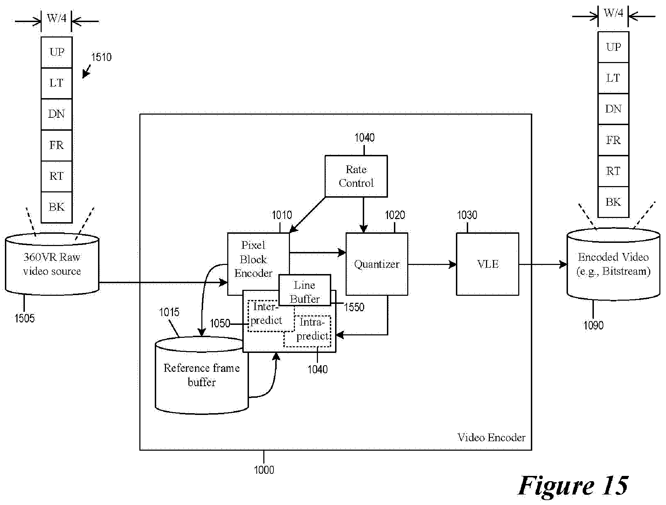

**Figure 15** illustrates a video encoder that encodes 360VR video in which the six faces of the cubic format are re-arranged into a layout that allows the use of a narrower line buffer during the encoding process. As illustrated, the video encoder 1000 receives a 360VR video source 1505 in which the six faces of the cubic format are in a re-arranged on-column layout 1510, i.e., the layout of 1402, in which the cubic faces are arranged in the order of up, left, down, front, right, and back. The width of the re-arranged video is the width of one cubic face, i.e., W/4 pixels. The encoding process uses a line buffer 1550 to store the necessary reconstructed pixel line in order to perform intra-prediction. Since the width of the re-arranged frame is W/4 pixels, the line buffer also has a width of W/4 pixels.

The encoding process produces encoded video 1090, which stores encoded frames that includes six cubic faces of the 360VR video in the narrow layout. In some embodiments, the encoded video 1090 takes the form of a bitstream that is compliant with a video coding standard, such as H.264, H.265, or VP9.

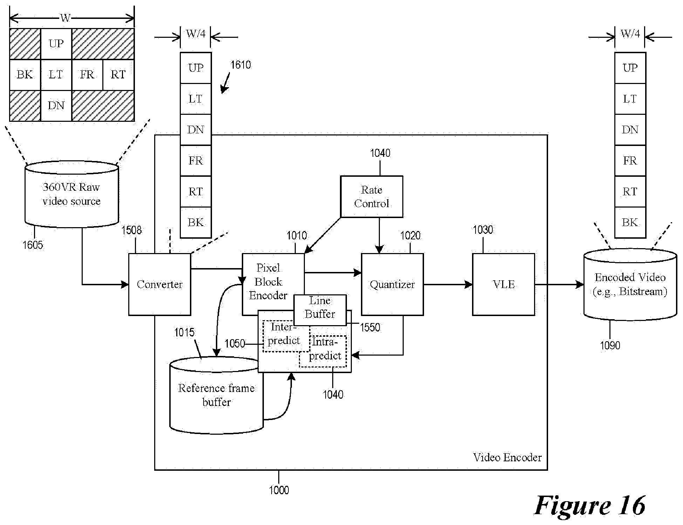

In some embodiments, the video encoder receives raw 360VR video source in the conventional contiguous cubic format (i.e., the layout 1401 of **Figure 14**) or in spherical format (i.e., the layout 1310 of **Figure 13**). The encoder 1000 in some of these embodiments converts the raw 360VR video into a narrower layout (e.g., the one-column layout 1402) by rearranging the six cubic faces. The converted video with the rearranged cubic layout is then encoded by using the narrower line buffer. **Figure 16** illustrates a video encoder that receives raw 360VR video source in contiguous cubic format while using a narrower line buffer.

As illustrated, the video encoder 1000 receives raw 360VR video 1605 in a conventional contiguous format. This raw conventional contiguous format can be the spherical format 1310 or the cubic format 1320 described above by reference to **Figure 13**. A converter 1508 reformats the raw 360VR video by re-arranging the six faces of the cubic format. This produces a converted video 1610 with re-arranged frames in the one-column layout (i.e., the layout of 1402). The encoder 1000 then performs encoding process on the converted video 1610 by using the line buffer 1550, which has a width of W/4 because the width of the re-arranged frames is W/4 pixels.

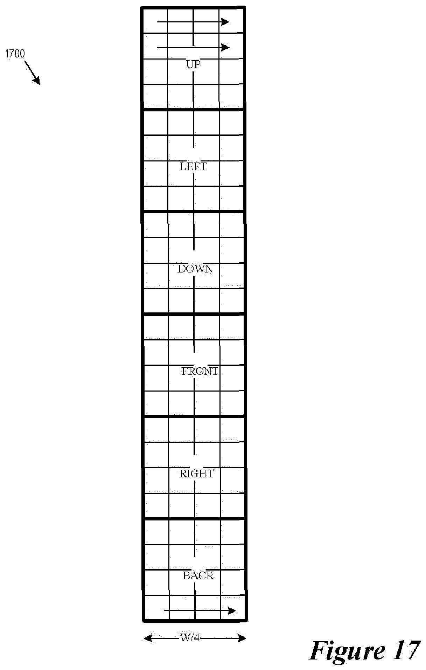

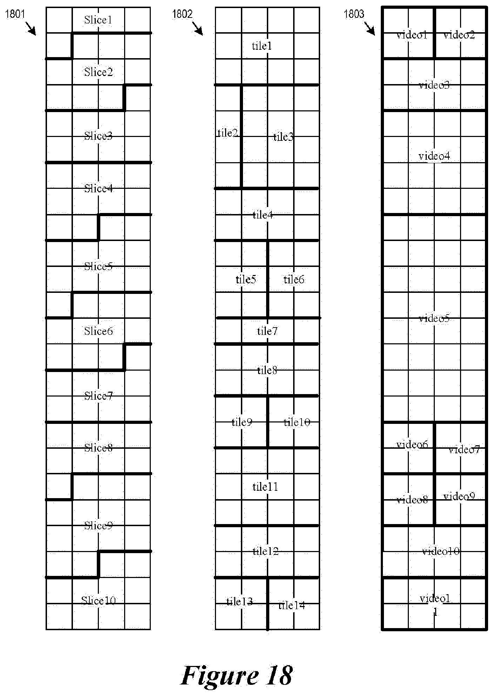

**Figure 17** illustrates the coding of a 360VR cubic frame 1700 that is rearranged into a one-column layout. As illustrated, the rearranged 360VR frame 1700 is divided into pixel blocks, and the pixel blocks are encoded/decoded in the raster-scan order. Since the rearranged frame has only one column of cubic faces, the encoder would encode the pixel blocks of one cubic face before proceeding to the next, specifically in the order of up, left, down, front, right, and back (according to the layouts of **Figure 14**). The pixel blocks of the re-arranged frame can also be partitioned into encoded data units such as slices, tiles, or a group of videos. **Figure 18** illustrates the partitioning of the rearranged frame 1700 into slices (at 1801), tiles (at 1802), or sub-videos (at 1803).

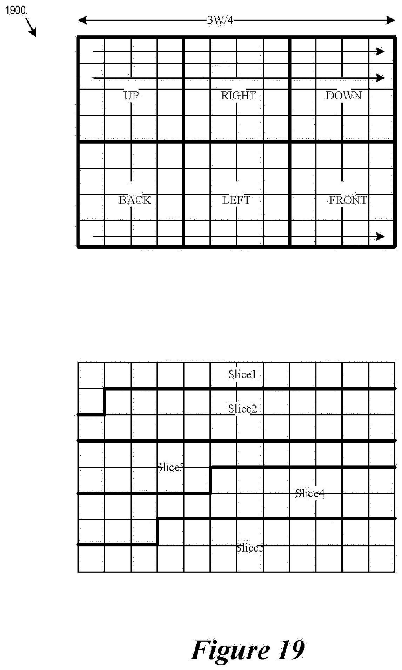

As mentioned, the six cubic faces of 360VR video can also be arranged into three-row-by-two-column layout (i.e., the layout 1403) or two-row-by-three-column layout (i.e., the layout 1404). **Figure 19** illustrates the coding of a 360VR cubic frame 1900 that is rearranged into a two-row-by-three-column layout during encoding.

As illustrated, the encoding process proceeds along each row of pixel blocks. The rows of pixel blocks near the top of the frame span cubic faces up, right, and down, while the rows of pixel blocks near the bottom of frame span cubic faces back, left, and front (according to the example of **Figure 14**). Since each row spans three cubic faces, the line-buffer required for encoding and decoding is 3W/4 pixels. **Figure 19** also illustrates the partitioning of the rearranged frame 1900 into slices 1 through 5. Each slice may span multiple cubic surfaces.

Returning to **Figure 15**. Since the rearranged 360VR frames are composed of six cubic faces, the encoder in some embodiments ensures that all partitions and all cubic faces of a rearranged 360VR frame have similar video quality. In some embodiments, the encoder performs rate control (at rate controller 1040) to ensure that the different partitions and the different cubic faces have similar quality by e.g., controlling the quantizer 1020.

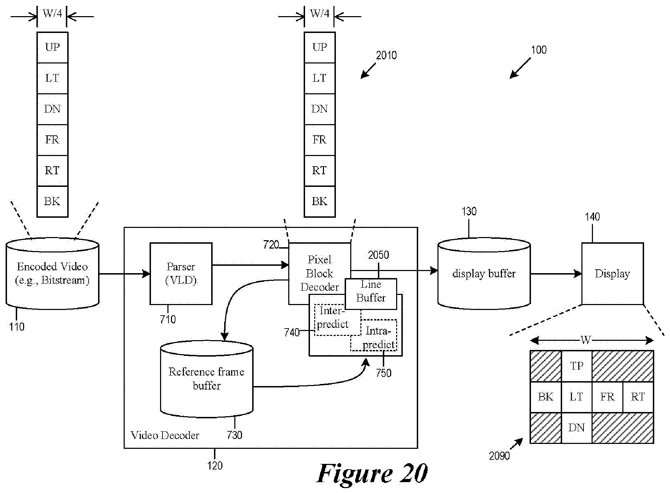

**Figure 20** illustrates a decoder that decodes 360VR video with rearranged cubic faces. Specifically, the figure illustrates the decoder 100 when it is decoding and displaying 360VR video, where the cubic faces of each frame is rearranged for the purpose reducing memory usage by the line buffer.

As illustrated, the video decoder 120 receives encoded video 110 (as bitstream), which contains encoded 360VR frames whose cubic faces are rearranged to reduce line buffer width. In the illustrated example, the cubic surfaces are in one-column layout (i.e., the layout 1402).

The parser 710 receives and parses the encoded video 110, and the pixel block decoder 720 reconstructs the pixel blocks of each frame. The pixel block decoder 720 includes a line buffer 2050 for temporarily storing the necessary reconstructed line of pixels used for performing intra prediction (at 750) for reconstructing a frame 2010. The line buffer 2050 only needs to be W/4 pixels wide, because the frame 2010 is a re-arranged frame that has the cubic faces in one single column.

The pixel block decoder 720 stores the reconstructed pixels in the reference frame buffer 730 for subsequent decoding and/or in the display buffer 130 for display by the display device 140. In some embodiments, the display buffer 130 stores the reconstructed pixels in the re-arranged narrow format (e.g., the layout 1402), and a display controller selects portions of the display buffer to the display 140 in order to construct the display frame 2090 in the original contiguous format (i.e., the layout 1401).

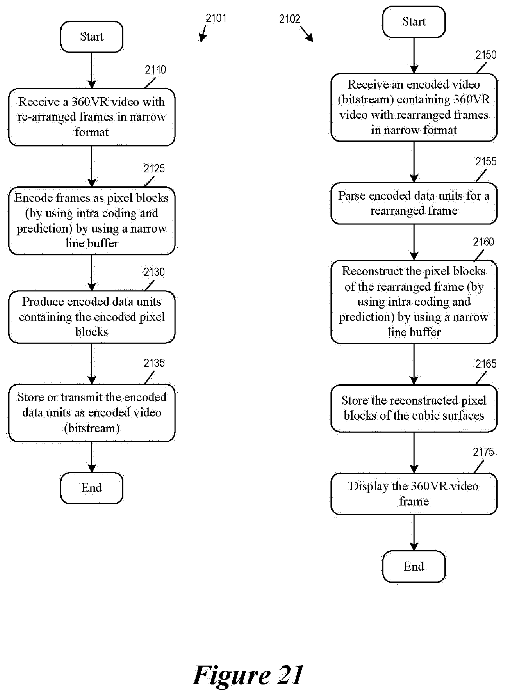

**Figure 21** conceptually illustrates processes 2101 and 2102 for encoding and decoding 360VR video in cubic format. The process 2101 is for encoding 360VR video, specifically by rearranging the six faces of cubic 360VR video into a narrow format. In some embodiments, the encoder 1000 performs the process 2101 when encoding 360VR video into bitstream. In some embodiments, one or more processing units implementing the encoder 1000 are configured to perform the process 2101. In some embodiments, the processing units performing the process 2101 do so by executing a software having modules that corresponds to the various components of the encoder 1000, e.g., the pixel block encoder 1010, the quantizer 1020, the variable VLE 1030, the rate controller 1040, the re-arranger 1508, etc. It is noted that, provided that the result is substantially the same, the steps are not required to be executed in the exact order shown in **Figure 21**.

The process 2101 starts when it receives (at step 2110) raw 360VR video. The raw 360VR video has frames that are already in a rearranged cubic format (e.g., layouts 1402, 1403, or 1404) in which the width of the rearranged frame is narrower than the frames in the conventional contiguous cubic format. In some embodiments, the raw 360VR video is in the conventional contiguous cubic format or in the spherical format (as illustrated in **Figure 13**). The process 2101 in some of these embodiments would rearrange the frames of the video from the conventional contiguous format into one of the rearranged cubic format.

The process 2101 then encodes (at step 2125) the rearranged frame as pixel blocks (by using intra coding and prediction) by using a narrow line buffer. In some embodiments, predictive encoding operations require reconstruction of the pixel blocks from the quantized samples, and the reconstruction uses the line buffer to temporarily store reconstructed pixel blocks. Having the narrower, rearranged frame allows the line buffer to be narrower.

The process 2101 produces (at step 2130) encoded data units containing the encoded pixel blocks. Such encoded data units partition the frame into slices, tiles, or a group of videos. The process 2101 then stores (at step 2135) or transmits the encoded data units as encoded video, i.e., bitstream. The process 2101 then ends.

The process 2102 is for decoding a bitstream of 360VR video whose frames have cubic surfaces in the rearranged narrow format (such as those produced by the process 2101). In some embodiments, the decoder 100 performs the process 2102 when decoding and displaying 360VR video. In some embodiments, one or more processing units implementing the decoder 100 are configured to perform the process 2102. In some embodiments, the processing units performing the process 2102 do so by executing a software having modules that corresponds to the various components of the decoding system 100, e.g., the parser 710, the pixel block decoder 720, the partial decoding controller 125, etc.

The process 2102 starts when it receives (at step 2150) an encoded video (i.e., bitstream) containing 360VR video with rearranged frames in narrow format. The process then parses (at step 2155) encoded data units in the bitstream for a rearranged frame.

The process 2102 reconstructs (at step 2160) the pixel blocks of the rearranged frame by using a narrow line buffer. The reconstruction uses the line buffer to temporarily store reconstructed pixel blocks. Having the narrower, rearranged frame allows the line buffer to be narrower.

The process 2102 stores (at step 2165) the reconstructed pixel blocks of the cubic faces. The process 2102 displays (at step 2175) the 360VR video frame (e.g., at the display device 140) based on the reconstructed pixels in the six faces of the cubic format. The process 2102 then ends.

### IV. Electronic System

Many of the above-described features and applications are implemented as software processes that are specified as a set of instructions recorded on a computer readable storage medium (also referred to as computer readable medium). When these instructions are executed by one or more computational or processing unit(s) (e.g., one or more processors, cores of processors, or other processing units), they cause the processing unit(s) to perform the actions indicated in the instructions. Examples of computer readable media include, but are not limited to, CD-ROMs, flash drives, random access memory (RAM) chips, hard drives, erasable programmable read only memories (EPROMs), electrically erasable programmable read-only memories (EEPROMs), etc. The computer readable media does not include carrier waves and electronic signals passing wirelessly or over wired connections.

In this specification, the term "software" is meant to include firmware residing in read-only memory or applications stored in magnetic storage which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the present disclosure. In some embodiments, the software programs, when installed to operate on one or more electronic systems, define one or more specific machine implementations that execute and perform the operations of the software programs.

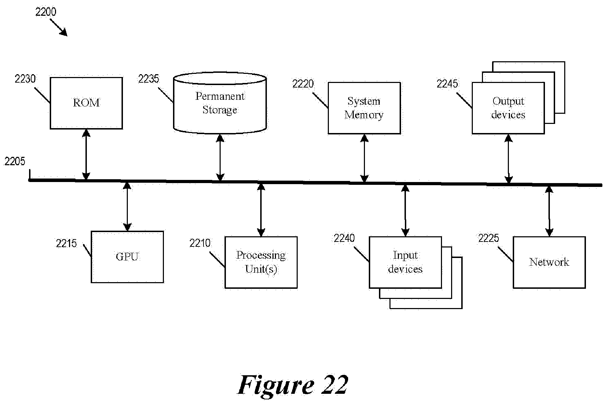

**Figure 22** conceptually illustrates an electronic system 2200 with which some embodiments of the present disclosure are implemented. The electronic system 2200 may be a computer (e.g., a desktop computer, personal computer, tablet computer, etc.), phone, PDA, or any other sort of electronic device. Such an electronic system includes various types of computer readable media and interfaces for various other types of computer readable media. Electronic system 2200 includes a bus 2205, processing unit(s) 2210, a graphics-processing unit (GPU) 2215, a system memory 2220, a network 2225, a read-only memory 2230, a permanent storage device 2235, input devices 2240, and output devices 2245.

The bus 2205 collectively represents all system, peripheral, and chipset buses that communicatively connect the numerous internal devices of the electronic system 2200. For instance, the bus 2205 communicatively connects the processing unit(s) 2210 with the GPU 2215, the read-only memory 2230, the system memory 2220, and the permanent storage device 2235.

From these various memory units, the processing unit(s) 2210 retrieves instructions to execute and data to process in order to execute the processes of the present disclosure. The processing unit(s) may be a single processor or a multi-core processor in different embodiments. Some instructions are passed to and executed by the GPU 2215. The GPU 2215 can offload various computations or complement the image processing provided by the processing unit(s) 2210.

The read-only-memory (ROM) 2230 stores static data and instructions that are needed by the processing unit(s) 2210 and other modules of the electronic system. The permanent storage device 2235, on the other hand, is a read-and-write memory device. This device is a non-volatile memory unit that stores instructions and data even when the electronic system 2200 is off. Some embodiments of the present disclosure use a mass-storage device (such as a magnetic or optical disk and its corresponding disk drive) as the permanent storage device 2235.

Other embodiments use a removable storage device (such as a floppy disk, flash memory device, etc., and its corresponding disk drive) as the permanent storage device. Like the permanent storage device 2235, the system memory 2220 is a read-and-write memory device. However, unlike storage device 2235, the system memory 2220 is a volatile read-and-write memory, such a random access memory. The system memory 2220 stores some of the instructions and data that the processor needs at runtime. In some embodiments, processes in accordance with the present disclosure are stored in the system memory 2220, the permanent storage device 2235, and/or the read-only memory 2230. For example, the various memory units include instructions for processing multimedia clips in accordance with some embodiments. From these various memory units, the processing unit(s) 2210 retrieves instructions to execute and data to process in order to execute the processes of some embodiments.

The bus 2205 also connects to the input and output devices 2240 and 2245. The input devices 2240 enable the user to communicate information and select commands to the electronic system. The input devices 2240 include alphanumeric keyboards and pointing devices (also called "cursor control devices"), cameras (e.g., webcams), microphones or similar devices for receiving voice commands, etc. The output devices 2245 display images generated by the electronic system or otherwise output data. The output devices 2245 include printers and display devices, such as cathode ray tubes (CRT) or liquid crystal displays (LCD), as well as speakers or similar audio output devices. Some embodiments include devices such as a touchscreen that function as both input and output devices.

Finally, as shown in Figure 22, bus 2205 also couples electronic system 2200 to a network 2225 through a network adapter (not shown). In this manner, the computer can be a part of a network of computers (such as a local area network ("LAN"), a wide area network ("WAN"), or an Intranet, or a network of networks, such as the Internet. Any or all components of electronic system 2200 may be used in conjunction with the present disclosure.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray® discs, ultra density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application specific integrated circuits (ASICs) or field programmable gate arrays (FPGAs). In some embodiments, such integrated circuits execute instructions that are stored on the circuit itself. In addition, some embodiments execute software stored in programmable logic devices (PLDs), ROM, or RAM devices.

As used in this specification and any claims of this application, the terms "computer", "server", "processor", and "memory" all refer to electronic or other technological devices. These terms exclude people or groups of people. For the purposes of the specification, the terms display or displaying means displaying on an electronic device. As used in this specification and any claims of this application, the terms "computer readable medium," "computer readable media," and "machine readable medium" are entirely restricted to tangible, physical objects that store information in a form that is readable by a computer. These terms exclude any wireless signals, wired download signals, and any other ephemeral signals.

While the present disclosure has been described with reference to numerous specific details, one of ordinary skill in the art will recognize that the present disclosure can be embodied in other specific forms. In addition, a number of the figures (including **Figures 8****,** **9****,** **11****,** and **21**) conceptually illustrate processes. The specific operations of these processes may not be performed in the exact order shown and described. The specific operations may not be performed in one continuous series of operations, and different specific operations may be performed in different embodiments. Furthermore, the process could be implemented using several sub-processes, or as part of a larger macro process. Thus, one of ordinary skill in the art would understand that the present disclosure is not to be limited by the foregoing illustrative details, but rather is to be defined by the appended claims.

### Example Apparatus

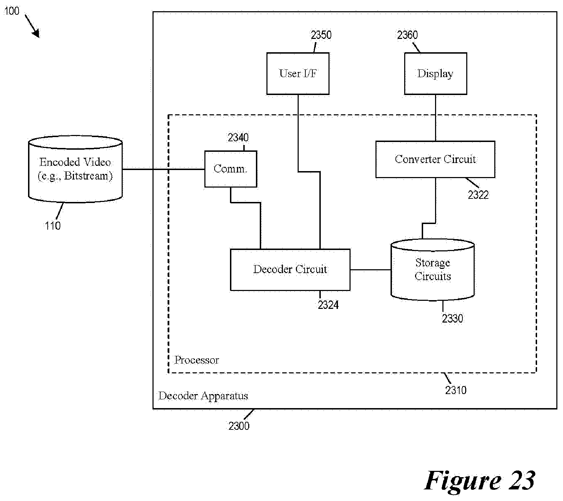

**Figure 23** depicts an exemplary decoder apparatus 2300 in accordance with some implementations of the present disclosure. The decoder apparatus 2300 may perform, execute or otherwise carry out various functions, tasks and/or operations related to concepts, techniques, schemes, solutions, scenarios, algorithms, approaches, processes and methods described for the video decoding system 100 herein, including examples schemes and scenarios, described by reference to **Figures 2-6****,** **12-14****,** **17-19****,** example block diagrams described by reference to **Figures 7** **and** **20**, as well as example processes 900 and 2102 described by reference to **Figures 9** and **21**.

The decoder apparatus 2300 may include one, some or all of the components shown in **Figure 23**. Apparatus 2300 may optionally include additional component(s) not shown in **Figure 23**. Such additional components are not relevant to the present disclosure, albeit necessary for the operation of apparatus 2300, and thus are not shown in **Figure 23** so as to avoid obscuring the illustration.

The decoder apparatus 2300 may be an electronic apparatus which may be, for example and not limited to, a portable device (e.g., smartphone, personal digital assistant, digital camera and the like), a computing device (e.g., laptop computer, notebook computer, desktop computer, tablet computer and the like) or a wearable device (e.g., smartwatch, smart bracelet, smart necklace and the like). Alternatively, apparatus 2300 may be implemented in the form of one or more integrated-circuit (IC) chips such as, for example and not limited to, one or more single-core processors, one or more multi-core processors, or one or more complex-instruction-set-computing (CISC) processors.

The decoder apparatus 2300 includes special-purpose circuitry, including a communications circuit 2340, a converter circuit 2322 and a decoder circuit 2324. The decoder circuit 2324 performs the operations of the parser 710 and the pixel block decoder 720, including inter-prediction 740 and intra-prediction 750. The decoder circuit 2324 also receives input data from a user interface 2350, which may include specification for view region 105. The converter circuit 2322 is configured to reformat decoded 360VR video frames from a narrow cubic layout (format 1402, 1403, or 1404) to a conventional contiguous cubic layout (format 1401 or 1320) or spherical layout (format 1310) for display. The communications circuit 2340 is configured to communicate with an external source and to receive encoded video 110 (i.e., bitstreams) from the external source. (The external source can be an external storage device or a network). In some examples not covered by the claims, the decoder apparatus 2300 is not equipped with the converter circuit 2322, and the decoder apparatus does not change the format of the decoded video frames for display.

The converter circuit 2322, the decoder circuit 2324, and the communications circuit 2340 may respectively include electronic components, including one or more transistors, one or more diodes, one or more capacitors, one or more resistors, one or more inductors, one or more memristors and/or one or more varactors, that are configured and arranged to achieve specific purposes in accordance with the present disclosure.

The decoder apparatus 2300 also includes a set of storage or memory circuits 2330. Such memory circuits may include flip-flops, latches, register files, static and/or dynamic random access memories. The memory circuits 2330 implements the reference frame buffer 730 and the line buffer 2050. In some embodiments, the memory circuits 2330 also implements the display buffer 130.

For some implementations, the converter circuit 2322, the decoder circuit 2324, the communications circuit 2340, and the set of storage or memory circuits 2330 may be integral parts of one or more processors (and for illustrative purposes and without limitation, those circuits are shown as integral parts of a processor 2310). A processor is a special-purpose computing device designed and configured to perform, execute or otherwise carry out specialized algorithms, software instructions, computations and logics to render or otherwise effect decoding of 360VR video applications in accordance with the present disclosure. That is, the processor 2310 may include specialized hardware (and, optionally, specialized firmware) specifically designed and configured to render or otherwise effect decoding of 360VR video in one or more novel ways not previously existing or available, such as partial decoding of 360VR video frames as well as processing 360VR video frames that are in narrow cubic layout.

In some implementations, the apparatus 2300 may include a display device 2360. Display device 2360 may be configured to display textual, graphical and/or video images. In some implementations, display device 240 may be a flat panel and/or a touch-sensing panel. Display device 240 may be implemented by any suitable technology such as, for example and not limited to, liquid crystal display (LCD), plasma display panel (PDP), light-emitting diode display (LED), organic light-emitting diode (OLED), electroluminescent display (ELD), surface-conduction electron-emitter display (SED), field emission display (FED), laser, carbon nanotubes, quantum dot display, interferometric modulator display (IMOD) and digital micro-shutter display (DMS). The decoder circuit 2324 may be operatively coupled to the display device 2360 to provide decoded pixel data of 360VR video to be displayed by display device 2360. As mentioned, the decoded pixel data is stored in the display buffer 130 prior to being displayed. The display buffer 130 can be implemented at the storage circuit 2330 or at the display device 2360.

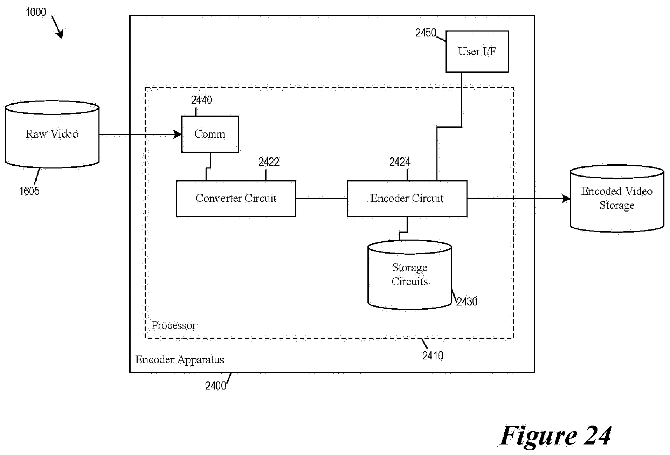

**Figure 24** depicts an exemplary encoder apparatus 2400 in accordance some implementations of the present disclosure. The encoder apparatus 2400 may perform, execute or otherwise carry out various functions, tasks and/or operations related to concepts, techniques, schemes, solutions, scenarios, algorithms, approaches, processes and methods described for the video encoding system 1000 herein, including examples schemes and scenarios, described by reference to **Figures 2-6****,** **12-14****,** **17-19****,** example block diagrams described by reference to **Figures 10****,** **15****, and** **16****,** as well as example processes 1100 and 2101 described by reference to **Figures 11** and **21**.

The encoder apparatus 2400 may include one, some or all of the components shown in **Figure 24****.** Apparatus 2400 may optionally include additional component(s) not shown in **Figure 24****.** Such additional components are not relevant to the present disclosure, albeit necessary for the operation of apparatus 2400, and thus are not shown in **Figure 24** so as to avoid obscuring the illustration.

The encoder apparatus 2400 may be an electronic apparatus which may be, for example and not limited to, a portable device (e.g., smartphone, personal digital assistant, digital camera and the like), a computing device (e.g., laptop computer, notebook computer, desktop computer, tablet computer and the like) or a wearable device (e.g., smartwatch, smart bracelet, smart necklace and the like). Alternatively, apparatus 2400 may be implemented in the form of one or more integrated-circuit (IC) chips such as, for example and not limited to, one or more single-core processors, one or more multi-core processors, or one or more complex-instruction-set-computing (CISC) processors.

The encoder apparatus 2400 includes special-purpose circuitry, including a communications circuit 2440, a converter circuit 2422 and an encoder circuit 2424. The encoder circuit 2424 performs the operations of the pixel block encoder 1010 (including inter-prediction 1050 and intra-prediction 1040), the quantizer 1020, the VLE 1030, the rate controller 1040. The encoder circuit 2424 also receives input data from a user interface 2450, which includes control signal to enable partial decoding optimization mode 1050. The converter circuit 2422 is configured to reformat raw 360VR video frames from a conventional contiguous cubic layout (format 1401 or 1320) or spherical layout (format 1310) to a narrow cubic layout (format 1402, 1403, or 1404) for encoding, i.e., to perform the function of the converter 1508 for re-arranging the cubic faces. The communications circuit 2440 is configured to communicate with an external source and to receive raw video 1605 from the external source. (The external source can be an external storage device or a network). In some examples not covered by the claims, the encoder apparatus 2400 is not equipped with the converter circuit 2422, and the encoder apparatus does not change the layout or the format of the raw video 1605 prior to encoding.

The converter circuit 2422, the encoder circuit 2424, and the communications circuit 2440 may respectively include electronic components, including one or more transistors, one or more diodes, one or more capacitors, one or more resistors, one or more inductors, one or more memristors and/or one or more varactors, that are configured and arranged to achieve specific purposes in accordance with the present disclosure.

The encoder apparatus 2400 also includes a set of storage or memory circuits 2430. Such memory circuits may include flip-flops, latches, register files, static and/or dynamic random access memories. The memory circuits 2430 implements the reference frame buffer 1015 and the line buffer 1550.

For some implementations, the converter circuit 2422, the encoder circuit 2424, the communications circuit 2440, and the set of storage or memory circuits 2430 may be integral parts of one or more processors (and for illustrative purposes and without limitation, those circuits are shown as integral parts of a processor 2410). A processor is a special-purpose computing device designed and configured to perform, execute or otherwise carry out specialized algorithms, software instructions, computations and logics to render or otherwise effect encoding of 360VR video applications in accordance with the present disclosure. That is, the processor 2410 may include specialized hardware (and, optionally, specialized firmware) specifically designed and configured to render or otherwise effect encoding of 360VR video in one or more novel ways not previously existing or available, such as encoding of 360VR video frames that are optimized for partial decoding as well as processing of 360VR video frames that are in narrow cubic layout.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., " a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., " a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

## Claims

1. A method comprising:
receiving a 360-degree virtual reality, also referred to as 360VR, video frame; and
reformatting the video frame, wherein the reformatted video frame comprises a plurality of cubic faces that each corresponds to a different face of a cube,
wherein the received 360VR video frame is in a spherical format (1210) or in a cubic format (1220), and when the received 360VR video frame is in the cubic format (1220), a plurality of cubic faces of the received 360VR video frame are arranged in a first layout (1401) that has a first width, and the cubic faces of the reformatted video frames are arranged in a second layout (1402, 1403) that has a second width that is narrower than the first width (1401),
**characterized by**
encoding the reformatted video frame by storing reference pixels at a line buffer and performing prediction based on reference pixels stored at the line buffer, wherein the width of the line buffer is based on the second width,
**characterized in that**
the second width of the second layout (1402, 1403) is a width of one cubic face or two cubic faces, and
the plurality of cubic faces in the reformatted video frame are arranged in (i) a single column of six faces or (ii) two columns of three cubic faces each.

2. The method of claim 1, wherein the first width of the first layout (1401) is a width of four cubic faces.

3. An apparatus comprising:
a communications circuit configured to receive a 360-degree virtual reality, also referred to as 360VR, video frame;
a converter circuit configured to reformat the video frame, wherein the reformatted video frame comprises a plurality of cubic faces that each corresponds to a different face of a cube,
wherein the plurality of cubic faces are arranged in (i) a single column of six faces or (ii) two columns of three cubic faces each, wherein the received 360VR video frame is in a spherical format (1210) or in a cubic format (1220), and when the received 360VR video frame is in the cubic format (1220), a plurality of cubic faces of the received 360VR video frame are arranged in a first layout (1401) that has a first width, and the cubic faces of the reformatted video frame are arranged in a second layout (1402, 1403) that has a second width that is narrower than the first width; and
an encoding circuit that is configured to encode the reformatted video frame by storing reference pixels at a line buffer and performing prediction based on reference pixels stored at the line buffer, wherein the width of the line buffer is based on the second width;
wherein the second width of the second layout (1402, 1403) is a width of one cubic face or two cubic faces.

4. The apparatus of claim 3, wherein the first width of the first layout (1401) is a width of four cubic faces.

5. An apparatus comprising:
a communications circuit configured to receive a 360-degree virtual reality, also referred to as 360VR, video frame, wherein the received video frame comprises a plurality of cubic faces that each corresponds to a different face of a cube,
wherein the plurality of cubic faces are arranged in (i) a single column of six faces or (ii) two columns of three cubic faces each;
a converter circuit configured to reformat the 360VR video frame, wherein the plurality of cubic faces of the received video frame are arranged in a first layout (1401) with a first width, wherein the reformatted 360VR video frame is in a spherical format (1210) or in a cubic format (1220), and when the reformatted 360VR video frame is in the cubic format (1220), a plurality of cubic faces of the reformatted 360VR video frame are arranged in a second layout (1402, 1403) with a second width that is wider than the first width, wherein the received 360VR video frame is an encoded video frame; and
a decoder circuit that is configured to decode the encoded video frame by storing reference pixels at a line buffer and performing pixel block reconstruction based on reference pixels stored at the line buffer, wherein the width of the line buffer is based on the first width;
wherein the first width of the first layout (1401) is a width of one cubic face or two cubic faces.

6. The apparatus of claim 5, wherein the second width of the second layout (1402, 1403) is a width of four cubic faces.

## Patentansprüche

1. Verfahren, umfassend:
Empfangen eines 360-Grad-Virtual-Reality, auch als 360VR bezeichnet, -Videorahmens; und
Umformatieren des Videorahmens, wobei der umformatierte Videorahmen eine Mehrzahl von Würfelflächen aufweist, welche jeweils zu einer unterschiedlichen Fläche eines Würfels korrespondieren,
wobei der empfangene 360VR-Videorahmen in einem Kugelformat (1210) oder in einem Würfelformat (1220) vorliegt, und wenn der empfangene 360VR-Videorahmen in dem Würfelformat (1220) vorliegt, eine Mehrzahl von Würfelflächen des empfangenen 360VR-Videorahmens in einer ersten Anordnung (1401) angeordnet ist, welche eine erste Breite aufweist, und die Würfelflächen des umformatierten Videorahmens in einer zweiten Anordnung (1402, 1403) angeordnet sind, welche eine zweite Breite aufweist, welche schmaler ist als die erste Breite (1401),
**gekennzeichnet durch**
Codieren des umformatierten Videorahmens durch Speichern von Referenzpixeln in einem Zeilenpuffer und Ausführen einer Prädiktion basierend auf den in dem Zeilenpuffer gespeicherten Referenzpixeln, wobei die Breite des Zeilenpuffers auf der zweiten Breite basiert,
**dadurch gekennzeichnet, dass**
die zweite Breite der zweiten Anordnung (1402, 1403) eine Breite einer Würfelfläche oder zweier Würfelflächen ist, und die Mehrzahl von Würfelflächen in dem umformatierten Videorahmen in (i) einer einzelnen Spalte von sechs Flächen oder (ii) zwei Spalten von jeweils drei Würfelflächen angeordnet ist.

2. Verfahren gemäß Anspruch 1, wobei die erste Breite der ersten Anordnung (1401) eine Breite von vier Würfelflächen ist.

3. Vorrichtung, aufweisend:
eine Kommunikationsschaltung, die ausgelegt ist, einen 360-Grad-Virtual-Reality, auch als 360VR bezeichnet, -Videorahmen zu empfangen;
eine Konvertierungsschaltung, die ausgelegt ist, den Videorahmen umzuformatieren, wobei der umformatierte Videorahmen eine Mehrzahl von Würfelflächen aufweist, welche jeweils zu einer unterschiedlichen Fläche eines Würfels korrespondieren,
wobei die Mehrzahl von Würfelflächen in (i) einer einzelnen Spalte von sechs Flächen oder (ii) zwei Spalten von jeweils drei Würfelflächen angeordnet ist, wobei der empfangene 360VR-Videorahmen in einem Kugelformat (1210) oder in einem Würfelformat (1220) vorliegt, und wenn der empfangene 360VR-Videorahmen in dem Würfelformat (1220) vorliegt, eine Mehrzahl von Würfelflächen des empfangenen 360VR-Videorahmens in einer ersten Anordnung (1401) angeordnet ist, welche eine erste Breite aufweist, und die Würfelflächen des umformatierten Videorahmens in einer zweiten Anordnung (1402, 1403) angeordnet sind, welche eine zweite Breite aufweist, welche schmaler ist als die erste Breite; und
eine Codierungsschaltung, welche ausgelegt ist, den umformatierten Videorahmen durch Speichern von Referenzpixeln in einem Zeilenpuffer und Ausführen einer Prädiktion basierend auf den in dem Zeilenpuffer gespeicherten Referenzpixeln zu codieren, wobei die Breite des Zeilenpuffers auf der zweiten Breite basiert;
wobei die zweite Breite der zweiten Anordnung (1402, 1403) eine Breite einer Würfelfläche oder zweier Würfelflächen ist.

4. Vorrichtung gemäß Anspruch 3, wobei die erste Breite der ersten Anordnung (1401) eine Breite von vier Würfelflächen ist.

5. Vorrichtung, aufweisend:
eine Kommunikationsschaltung, die ausgelegt ist, einen 360-Grad-Virtual-Reality, auch als 360VR bezeichnet, -Videorahmen zu empfangen, wobei der empfangene Videorahmen eine Mehrzahl von Würfelflächen aufweist, welche jeweils zu einer unterschiedlichen Fläche eines Würfels korrespondieren,
wobei die Mehrzahl von Würfelflächen in (i) einer einzelnen Spalte von sechs Flächen oder (ii) zwei Spalten von jeweils drei Würfelflächen angeordnet ist;
eine Konvertierungsschaltung, die ausgelegt ist, den 360VR-Videorahmen umzuformatieren, wobei die Mehrzahl von Würfelflächen des empfangenen Videorahmens in einer ersten Anordnung (1401) mit einer ersten Breite angeordnet ist, wobei der umformatierte 360VR-Videorahmen in einem Kugelformat (1210) oder in einem Würfelformat (1220) vorliegt, und wenn der umformatierte 360VR-Videorahmen in dem Würfelformat (1220) vorliegt, eine Mehrzahl von Würfelflächen des umformatierten 360VR-Videorahmens in einer zweiten Anordnung (1402, 1403) mit einer zweiten Breite, welche breiter ist als die erste Breite, angeordnet ist, wobei der empfangene 360VR-Videorahmen ein codierter Videorahmen ist; und
eine Decodiererschaltung, welche ausgelegt ist, den codierten Videorahmen durch Speichern von Referenzpixeln in einem Zeilenpuffer und Ausführen einer Pixelblock-Rekonstruktion basierend auf den in dem Zeilenpuffer gespeicherten Referenzpixeln zu decodieren, wobei die Breite des Zeilenpuffers auf der ersten Breite basiert;
wobei die erste Breite der ersten Anordnung (1401) eine Breite einer Würfelfläche oder zweier Würfelflächen ist.

6. Vorrichtung gemäß Anspruch 5, wobei die zweite Breite der zweiten Anordnung (1402, 1403) eine Breite von vier Würfelflächen ist.

## Revendications

1. Procédé comprenant :
la réception d'une trame vidéo de réalité virtuelle à 360 degrés, également appelée 360 VR ; et
le reformatage de la trame vidéo, où la trame vidéo reformatée comprend une pluralité de faces cubiques qui correspondent chacune à une face différente d'un cube,
dans lequel la trame vidéo 360 VR reçue est dans un format sphérique (1210) ou dans un format cubique (1220), et lorsque la trame vidéo 360 VR reçue est dans le format cubique (1220), une pluralité de faces cubiques de la trame vidéo 360 VR reçue sont agencées dans une première disposition (1401) qui a une première largeur, et les faces cubiques des trames vidéo reformatées sont agencées dans une deuxième disposition (1402, 1403) qui a une deuxième largeur plus petite que la première largeur (1401),
**caractérisé par**
le codage de la trame vidéo reformatée en stockant des pixels de référence au niveau d'une mémoire tampon de ligne et en effectuant une prédiction sur la base de pixels de référence stockés au niveau de la mémoire tampon de ligne, où la largeur de la mémoire tampon de ligne est basée sur la deuxième largeur,
**caractérisé en ce que**
la deuxième largeur de la deuxième disposition (1402, 1403) est une largeur d'une face cubique ou de deux faces cubiques, et
la pluralité de faces cubiques dans la trame vidéo reformatée sont agencées en (i) une seule colonne de six faces ou (ii) deux colonnes de trois faces cubiques chacune.

2. Procédé de la revendication 1, dans lequel la première largeur de la première disposition (1401) est une largeur de quatre faces cubiques.

3. Appareil comprenant :
un circuit de communications configuré pour recevoir une trame vidéo de réalité virtuelle à 360 degrés, également appelée 360 VR ;
un circuit convertisseur configuré pour reformater la trame vidéo, où la trame vidéo reformatée comprend une pluralité de faces cubiques qui correspondent chacune à une face différente d'un cube,
dans lequel la pluralité de faces cubiques sont agencées en (i) une seule colonne de six faces ou (ii) deux colonnes de trois faces cubiques chacune, où la trame vidéo 360 VR reçue est dans un format sphérique (1210) ou dans un format cubique (1220), et lorsque la trame vidéo 360 VR reçue est dans le format cubique (1220), une pluralité de faces cubiques de la trame vidéo 360 VR reçue sont agencées dans une première disposition (1401) qui a une première largeur, et les faces cubiques de la trame vidéo reformatée sont agencées dans une deuxième disposition (1402, 1403) qui a une deuxième largeur plus petite que la première largeur ; et
un circuit de codage qui est configuré pour coder la trame vidéo reformatée en stockant des pixels de référence au niveau d'une mémoire tampon de ligne et en effectuant une prédiction sur la base de pixels de référence stockés au niveau de la mémoire tampon de ligne, où la largeur de la mémoire tampon de ligne est basée sur la deuxième largeur ;
dans lequel la deuxième largeur de la deuxième disposition (1402, 1403) est une largeur d'une face cubique ou de deux faces cubiques.

4. Appareil de la revendication 3, dans lequel la première largeur de la première disposition (1401) est une largeur de quatre faces cubiques.

5. Appareil comprenant :
un circuit de communications configuré pour recevoir une trame vidéo de réalité virtuelle à 360 degrés, également appelée 360 VR, où la trame vidéo reçue comprend une pluralité de faces cubiques qui correspondent chacune à une face différente d'un cube,
dans lequel la pluralité de faces cubiques sont agencées en (i) une seule colonne de six faces ou (ii) deux colonnes de trois faces cubiques chacune ;
un circuit convertisseur configuré pour reformater la trame vidéo 360 VR, où la pluralité de faces cubiques de la trame vidéo reçue sont agencées dans une première disposition (1401) ayant une première largeur, où la trame vidéo 360 VR reformatée est dans un format sphérique (1210) ou dans un format cubique (1220), et lorsque la trame vidéo 360 VR reformatée est dans le format cubique (1220), une pluralité de faces cubiques de la trame vidéo 360 VR reformatée sont agencées dans une deuxième disposition (1402, 1403) ayant une deuxième largeur qui est plus grande que la première largeur, où la trame vidéo 360 VR reçue est une trame vidéo codée ; et
un circuit décodeur qui est configuré pour décoder la trame vidéo codée en stockant des pixels de référence au niveau d'une mémoire tampon de ligne et en effectuant une reconstruction de bloc de pixels sur la base de pixels de référence stockés au niveau de la mémoire tampon de ligne, où la largeur de la mémoire tampon de ligne est basée sur la première largeur ;
dans lequel la première largeur de la première disposition (1401) est une largeur d'une face cubique ou de deux faces cubiques.

6. Appareil de la revendication 5, dans lequel la deuxième largeur de la deuxième disposition (1402, 1403) est une largeur de quatre faces cubiques.
